**Europäisches Patentamt**

**European Patent Office**

**Office européen des brevets**

(19)

(11) Veröffentlichungsnummer: **0 025 545**
**B1**

(12)

# EUROPÄISCHE PATENTSCHRIFT

(45) Veröffentlichungstag der Patentschrift:
16.03.83

(21) Anmeldenummer: 80105212.7

(22) Anmeldetag: 02.09.80

(51) Int. Cl.³: **B 60 J 1/02**, B 60 J 1/20,
B 60 S 1/04

(54) **Windschutzscheibe für Kraftfahrzeuge.**

(30) Priorität: 12.09.79 DE 2936823

(43) Veröffentlichungstag der Anmeldung:
25.03.81 Patentblatt 81/12

(45) Bekanntmachung des Hinweises auf die Patenterteilung:
16.03.83 Patentblatt 83/11

(84) Benannte Vertragsstaaten:
**BE DE FR IT SE**

(56) Entgegenhaltungen:
**DE-A-1 911 991**
**DE-A-2 457 889**
**DE-A-2 902 748**
**DE-B-2 507 037**
**GB-A-1 512 327**
**US-A-2 974 340**

(73) Patentinhaber: Vereinigte Glaswerke GmbH, Viktoria Allee 3-5, D-5100 Aachen (DE)

(72) Erfinder: Kunert, Heinz, Dr. phil., Am Krieler Dom 23, D-5000 Köln 41 (DE)

Windschutzscheibe für Kraftfahrzeuge

Die Erfindung betrifft eine Windschutzscheibe für Kraftfahrzeuge mit auf der Aussenfläche der Glasscheibe in dem von dem Scheibenwischer überstrichenen Bereich angeordneten erhabenen streifenförmigen Profilkörpern, die eine oder mehrere Abstreifkanten für die Reinigung des Scheibenwischerblattes bilden.

Die erhabenen Profilkörper mit ihren Abstreifkanten haben die Aufgabe, die Scheibenwischerblätter von den an ihnen anhaftenden Schmutzpartikeln und dem anhaftenden Wasser zu befreien. Dadurch wird zum einen erreicht, dass das vom Scheibenwischer überstrichene Feld nicht ständig wieder neu verschmutzt wird durch die an dem Wischerblatt anhaftenden Schmutz- und Wassermengen. Zum anderen wird die Verletzungsgefahr der Glasoberfläche herabgesetzt, die dadurch gegeben ist, dass es sich bei den Schmutzpartikeln oft um harte und körnige Substanzen handelt, die sich an den Wischerblättern festsetzen und durch den dauernden Schleifvorgang die Oberfläche aufrauhen. Gerade auf solchen aufgerauhten und eingekerbten Oberflächen setzen sich bevorzugt Schmutzpartikel fest, die zusätzlich zu den Aufrauhungen die Ursache von Lichtstreuungen an den Windschutzscheiben sind. Streulichterscheinungen bei Windschutzscheiben bewirken bekanntlich eine Verringerung der Wahrnehmungsdistanz bei Nachtfahrt. Diese Nachteile können durch die Anordnung von Abstreifkanten für die Wischerblätter weitgehend behoben, zumindest aber stark reduziert werden.

Bei einer bekannten Windschutzscheibe mit den eingangs genannten Merkmalen sind die streifenförmigen Profilkörper an einer länglichen Grundplatte aus einem transparenten Kunststoff in Form einer Vielzahl von kurzen erhabenen Rippen angeformt. Die diese Rippen tragende Grundplatte ist ihrerseits mittels einer Klebeschicht auf der äusseren Oberfläche der Windschutzscheibe aufgeklebt. Wenn die Platte mit den Abstreifrippen unmittelbar am Rand der Windschutzscheibe neben dem Einfassgummi angeordnet ist, kann sie auch durch Einstecken eines Teiles der Grundplatte in die Befestigungsnut des Einfassgummiprofils zwischen die Glasscheibe und das Einfassprofil auf der Windschutzscheibe befestigt werden. Eine dauerhafte Befestigung der Grundplatte ist auf diese Weise auf der den atmosphärischen Einflüssen ausgesetzten Seite der Windschutzscheibe schwer zu erreichen. Probleme entstehen auch dadurch, dass durch das ständige Überstreichen des Scheibenwischers die Verbindung auch mechanischen Belastungen ausgesetzt ist. Ferner ist die Höhe der Abstreifrippen durch die erforderliche Grundplatte und die Kleberschicht verhältnismässig gross. Da ausserdem alle Kunststoffmaterialien, die für diesen Zweck in Frage kommen, nur eine verhältnismässig geringe Härte und Verschleissfestigkeit aufweisen, sind diese bekannten Abstreifrippen nicht sehr dauerhaft, sondern werden bei häufiger Wischertätigkeit verhältnismässig schnell abgenutzt.

Der Erfindung liegt die Aufgabe zugrunde, eine Windschutzscheibe mit verschleissfesten Abstreifrippen zu schaffen, die dauerhaft auf der Glasscheibe befestigt sind.

Die Erfindung besteht darin, dass die streifenförmigen Profilkörper aus einem auf die Glasscheibe aufgedruckten und bei erhöhten Temperaturen eingebrannten emailartigen Material bestehen.

Abstreifrippen aus einem eingebrannten Email haben eine Härte und Verschleissfestigkeit, die mit diesen Eigenschaften der Silikatglasscheibe vergleichbar sind. Aufgrund dieser Eigenschaften sind Profilkörper aus einem eingebrannten Email für den genannten Zweck hervorragend geeignet. Durch das Einbrennen dieses Materials erfolgt eine optimale Befestigung dieser Streifen auf der Glasoberfläche. Ferner hat es sich gezeigt, dass mit Hilfe bekannter Druckverfahren, insbesondere des Siebdruckverfahrens, die streifenförmigen Körper in ausreichender Dicke aufgetragen werden können, so dass nach dem Einbrennen für den gewünschten Zweck wirkungsvolle Profilkörper entstehen.

Vorteilhafte Ausgestaltungen und Weiterbildungen der Erfindung sind Gegenstand der Unteransprüche und der nachfolgenden Beschreibung verschiedener Ausführungsbeispiele, die auch in den Zeichnungen dargestellt sind. Von den Zeichnungen zeigt:

Fig. 1 eine erfindungsgemässe Windschutzscheibe mit schematisch dargestellten Scheibenwischern in der Ansicht;

Fig. 2 eine Schnittdarstellung der in Fig. 1 dargestellten Windschutzscheibe entlang der Linie II-II;

Fig. 3 eine Schnittdarstellung durch eine andere Ausführungsform einer Windschutzscheibe nach der Erfindung;

Fig. 4 eine andere Ausführung der geometrischen Form als Profilkörper;

Fig. 5 die Ansicht einer Windschutzscheibe, bei der die die Abstreifkanten bildenden Profilkörper gleichzeitig als Heizleiter dienen;

Fig. 6 die Ansicht einer Windschutzscheibe, die getrennt voneinander angeordnete Profilkörper für die Abstreifkanten und Heizleiter aufweist, und

Fig. 7 eine weitere Ausführungsform einer erfindungsgemäss ausgebildeten Windschutzscheibe.

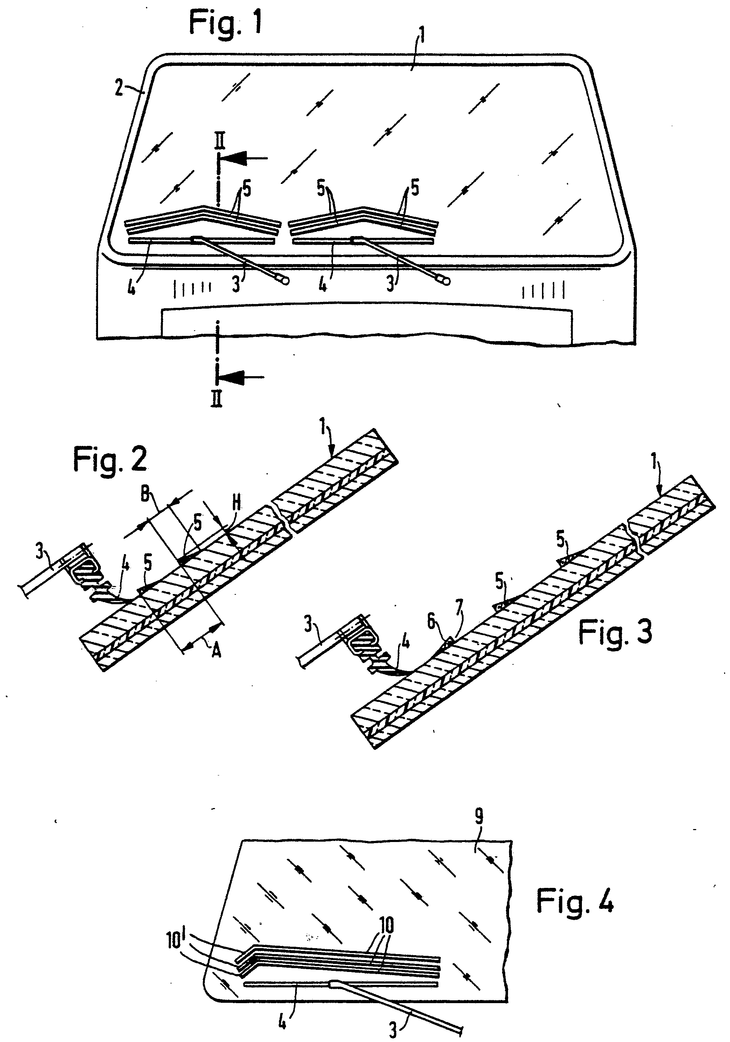

In den Fig. 1 und 2 ist eine Windschutzscheibe 1 aus Verbundglas dargestellt, die in den Rahmen 2 der Karosserie eingebaut ist. In der Karosserie sind die Scheibenwischerarme 3 gelagert, die die Scheibenwischerblätter 4 tragen, die hier in ihrer Ruhestellung dargestellt sind. Oberhalb der Ruhestellung der Scheibenwischerblätter 4 sind aussen auf der Glasoberfläche streifenförmige Profilkörper 5 angeordnet. Diese Profilkörper 5 entsprechen in ihrer Länge etwa der Länge der Wischerblätter 4.

Sie sind jeweils dachförmig angeordnet, und jedes Teilstück ist mit einer solchen Neigung zur Horizontalen angeordnet, dass einerseits das Wischerblatt beim Überstreichen des Profilkörpers mit dem Profilkörper einen spitzen Winkel bildet, und dass andererseits die Neigung ausreicht, um das vom Wischerblatt abgestreifte Wasser nach beiden Seiten leicht abfliessen zu lassen.

Querschnitt und Abmessungen der Profilkörper 5 sind aus Fig. 2 ersichtlich. Insbesondere ist erkennbar, dass die Profilkörper im Querschnitt keilförmig bzw. sägezahnförmig ausgebildet sind, wobei die die eigentliche Abstreifkante bildende Fläche etwa senkrecht zur Glasoberfläche verläuft. Die Höhe H der Profilkörper beträgt etwa 1 mm, die Breite B etwa 2 bis 3 mm, und der Abstand A zwischen den senkrechten Flächen zweier parallel zueinander angeordneter Profilkörper etwa 10 mm.

Um den durch die Erfindung angestrebten Zweck zu erreichen, ist es nicht erforderlich, dass die Scheibenwischer bei jedem Bewegungszyklus über die Abstreifkanten geführt werden. Es kann z.B. völlig ausreichen, wenn die Scheibenwischerblätter nur jeweils nach einer gewissen Anzahl von Bewegungszyklen die Abstreifkanten überstreichen. Zu diesem Zweck kann man eine Steuerung für die Scheibenwischerbewegung vorsehen derart, dass bei einem normalen Bewegungszyklus das Wischerblatt oberhalb der Abstreifkante seine Richtung ändert, ohne die Abstreifkante zu überstreichen bzw. zu berühren, und nur beispielsweise bei jedem zehnten Bewegungszyklus über die Abstreifkante geführt wird.

Fig. 3 zeigt eine Ausführungsform, bei der unterhalb zweier Profilkörper 5, deren geneigte Oberfläche nach oben abfällt, ein weiterer Profilkörper 6 angeordnet ist, dessen geneigte Oberfläche nach unten abfällt. Dadurch wird zwischen dem Unteren der beiden Profilkörper 5 und dem Profilkörper 6 eine Ablaufrinne 7 für das von den Wischerblättern abgestreifte Wasser gebildet. Die von dem Profilkörper 6 gebildete Abstreifkante sorgt dafür, dass bei der Abwärtsbewegung des Wischerblattes die auf der unteren Oberfläche haftenden Verunreinigungen von dem Wischerblatt abgestreift werden, während die von den Profilkörpern 5 gebildeten Abstreifkanten die Aufgabe haben, bei der Aufwärtsbewegung des Wischerblattes auf der oberen Oberfläche des Wischerblattes haftende Verunreinigungen abzustreifen, und durch das Wischerblatt mitgeschlepptes Wasser von diesem zu entfernen.

Grundsätzlich können die Profilkörper auch andere geometrische Formen haben. So können sie beispielsweise auf ihrer gesamten Länge geradlinig oder auch kurvenförmig ausgebildet sein. Es ist lediglich darauf zu achten, dass die Profilkörper mit einer ausreichenden Neigung zur Horizontalen angeordnet sind, um das Abfliessen des abgestreiften Wassers zu erleichtern. Bei der in Fig. 4 dargestellten möglichen Ausführungsform sind auf der Windschutzscheibe 9 drei Profilkörper 10 übereinander angeordnet, die im wesentlichen geradlinig ausgebildet sind, und lediglich an einem Ende einen Abschnitt 10' mit entgegengesetzter Neigung aufweisen.

Die Profilkörper 5 bzw. 10 bestehen aus einem emailartigen Material, das mit der Glasoberfläche innig verbunden ist. Solche Materialien, die auch unter der Bezeichnung Keramische Einbrennfarben im Handel erhältlich sind, werden in Pastenform nach einem geeigneten Verfahren auf die kalte Glasscheibe aufgetragen. Als Auftrageverfahren hat sich beispielsweise das Siebdruckverfahren bewährt. Der gewünschte Querschnitt der Profilkörper wird dabei durch entsprechende Gestaltung der Siebdruckschablone bzw. durch Übereinanderdrucken mehrerer Schichten erreicht. Die aufgedruckte Emailpaste wird getrocknet, und anschliessend bei hohen Temperaturen eingebrannt. Da für die Einbrennfarben Temperaturen von etwa 580 bis 650°C erforderlich sind, erfolgt der Einbrennprozess zweckmässig im Zuge der Erwärmung, die beim Biegen und/oder beim Vorspannen der Glasscheiben ohnehin erforderlich ist. Eine geeignete Einbrennfarbe mit einem Einbrenntemperaturbereich zwischen 580 und 620°C ist z.B. bei der Firma Blythe Colours B.V. unter der Handelsnummer 39.269/5/63 erhältlich.

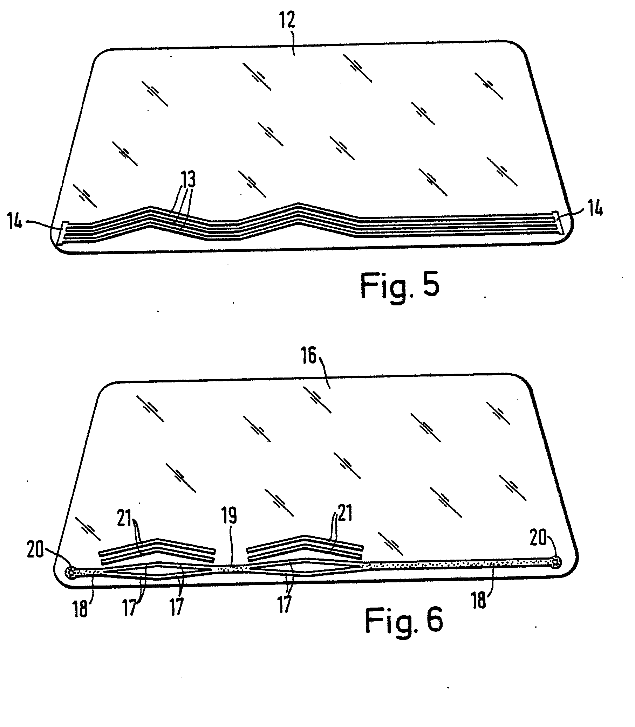

Als Material für die Profilkörper eignen sich u.U. auch solche Emails, die durch einen mehr oder weniger hohen Gehalt an Metallpartikeln elektrisch leitend sind. Die Profilkörper 13 können daher in Form zusammenhängender, sich über die gesamte Breite der Windschutzscheibe 12 erstreckender Leiter aufgebracht werden, wie es in Fig. 5 dargestellt ist. Seitlich münden die Profilkörper 13 in Sammelschienen 14, die über entsprechende Anschlusselemente an das Bordstromnetz angeschlossen werden. Bei der in Fig. 5 dargestellten Ausführungsform sind drei parallel zueinander angeordnete Profilkörper 13 parallel geschaltet und bilden so auf der gesamten Breite der Windschutzscheibe unten ein schmales beheizbares Feld, das dazu dient, den sich in diesem Bereich der Windschutzscheibe ansammelnden Schnee wegzutauen bzw. den festgefrorenen Scheibenwischer freizuheizen.

Fig. 6 zeigt eine demgegenüber abgewandelte Ausführungsform, bei der auf einer Windschutzscheibe 16 am unteren Rand im Bereich der Ruhestellung der Scheibenwischer Heizleiter 17 angeordnet sind, die über breitere Leiterstücke 18, 19 miteinander bzw. mit Anschlusselementen 20 zum Anschluss an das Bordstromnetz verbunden sind. Oberhalb der Heizleiter 17 sind in dachförmiger Anordnung Profilkörper 21 angeordnet, die ausschliesslich die Funktion der Bildung von Abstreifkanten für die Wischerblätter haben. Bei dieser Ausführungsform ist sichergestellt, dass das durch die Profilkörper 21 abgestreifte Wasser ungehindert von den Profilkörpern abfliessen kann.

Mit besonderem Vorteil lassen sich die erfindungsgemässen streifenförmigen Profilkörper im unteren Feld von Windschutzscheiben anordnen, die für Karosserien bestimmt sind, bei denen der untere Teil der Windschutzscheibe durch die Motorhaube verdeckt ist. Bei solchen versenkt angeordneten Windschutzscheiben liegt auch der Scheibenwischer in seiner Ruhestellung unterhalb des Niveaus der Motorhaube. Bei diesen Anordnungen können auch die streifenförmigen Profilkörper nach der Erfindung so tief auf der Windschutzscheibe angeordnet werden, dass sie durch die Motorhaube verdeckt werden und als solche nicht in Erscheinung treten.

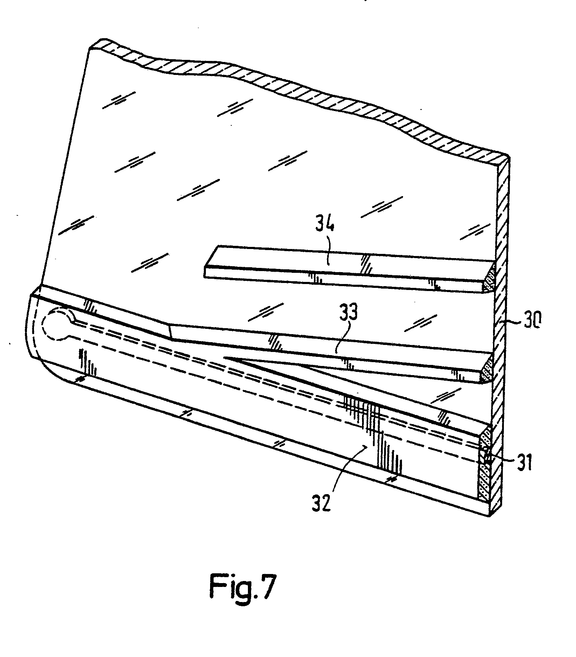

Fig. 7 schliesslich zeigt in einem Teilausschnitt, und teilweise im Schnitt dargestellt, eine weitere Ausführungsform einer Windschutzscheibe, die in ihrem unteren Randbereich mit einer elektrischen Beheizung versehen ist, um den dort aufligenden Scheibenwischer freizuheizen, wenn er festgefroren ist oder wenn sich Schneereste dort angesammelt haben, die den Scheibenwischer in seiner Bewegung behindern. Als Heizleiter 31 dient dabei ein aufgedruckter und in die Oberfläche der Glasscheibe 30 eingebrannter streifenförmiger Körper aus einer Leitsilbermasse. Um den Heizleiter 31 zu schützen, und um gleichzeitig die Glasscheibe in diesem Bereich undurchsichtig zu machen, ist über dem Heizleiter 31 auf einer relativ breiten Zone eine Schicht 32 aus einer lichtundurchlässigen und Wärmestrahlung absorbierenden keramischen Einbrennfarbe angeordnet, so wie es in der nicht zum Stand der Technik gehörenden DE-A1 Nr. 2902748 und der EP-A Nr. 13970 (angemeldet am 22.1.80 mit Prior. vom 25.1.79, veröffentlicht am 6.8.80) beschrieben ist. Als keramische Einbrennfarbe wird wiederum die unter der Bezeichnung 39.269/5/63 bei der Firma Blythe Colours B.V. erhältliche schwarze Einbrennfarbe verwendet. Sie wird mit Hilfe des Siebdruckverfahrens aufgebracht. In demselben Druckvorgang, mit dem die Schicht 32 aufgedruckt wird, werden die Profilkörper 33 und 34 aufgebracht, die die Abstreifkanten für die Scheibenwischerblätter bilden. Der untere Profilkörper 33 geht ohne Unterbrechung in die Schicht 32 über. Dadurch wird erreicht, dass durch den Profilkörper 33 eine Ablauffläche für das von der Abstreifkante des Profilkörpers 34 abgestreifte Wasser gebildet wird, wodurch das Wasser seitlich bis ausserhalb des von dem Scheibenwischer überstrichenen Bereichs abfliesst.

**Patentansprüche**

1. Windschutzscheibe für Kraftfahrzeuge mit auf der Aussenfläche der Glasscheibe (1, 9, 12, 16, 30) in dem von dem Scheibenwischer (3, 4) überstrichenen Bereich angeordneten erhabenen streifenförmigen Profilkörpern (5; 6; 10; 13; 17; 21; 33, 34), die eine oder mehrere Abstreifkanten für die Reinigung des Scheibenwischerblattes bilden, dadurch gekennzeichnet, dass die streifenförmigen Profilkörper aus einem auf die Glasoberfläche aufgedruckten und bei erhöhten Temperaturen eingebrannten emailartigen Material bestehen.

2. Windschutzscheibe nach Anspruch 1, aus gebogenem Verbundglas, dadurch gekennzeichnet, dass die streifenförmigen Profilkörper (5; 6; 10; 13; 17; 21; 33, 34) im Zuge des Biegevorgangs der Glasscheiben eingebrannt sind.

3. Windschutzscheibe nach Anspruch 1, aus thermisch vorgespanntem Einscheibensicherheitsglas, dadurch gekennzeichnet, dass die streifenförmigen Profilkörper (5; 6; 10; 13; 17; 21; 33, 34) im Zuge der dem Vorspannvorgang vorausgegangenen Wärmebehandlung eingebrannt sind.

4. Windschutzscheibe nach einem oder mehreren der Ansprüche 1 bis 3, dadurch gekennzeichnet, dass die streifenförmigen Profilkörper (5; 6; 10; 13; 17; 21; 33, 34) zur Horizontalen geneigt in einer solchen Winkellage angeordnet sind, dass sie beim Überstreichen durch das Scheibenwischerblatt mit diesem einen Winkel ≠ null Grad bilden.

5. Windschutzscheibe nach einem oder mehreren der Ansprüche 1 bis 4, dadurch gekennzeichnet, dass mehrere streifenförmige Profilkörper (5; 10; 13; 21; 33, 34) parallel zueinander angeordnet sind.

6. Windschutzscheibe nach einem oder mehreren der Ansprüche 1 bis 5, dadurch gekennzeichnet, dass die streifenförmigen Profilkörper (5, 6) einen keilförmigen bzw. sägezahnförmigen Querschnitt aufweisen.

7. Windschutzscheibe nach einem oder mehreren der Ansprüche 1 bis 6, dadurch gekennzeichnet, dass die streifenförmigen Profilkörper (5; 10; 13; 21) aus geradlinigen Segmenten bestehen, die unter einem stumpfen Winkel zueinander dachförmig angeordnet sind.

8. Windschutzscheibe nach einem oder mehreren der Ansprüche 1 bis 6, dadurch gekennzeichnet, dass die streifenförmigen Profilkörper einen kurvenförmigen Verlauf aufweisen.

9. Windschutzscheibe nach einem der Ansprüche 1 bis 8, dadurch gekennzeichnet, dass die streifenförmigen Profilkörper (13) aus einem elektrisch leitenden emailartigen Material bestehen, mit Stromanschlüssen für den Anschluss an das Bordstromnetz versehen sind, und als Heizleiter dienen.

10. Windschutzscheibe nach einem oder mehreren der Ansprüche 1 bis 9 für ein Kraftfahrzeug mit in ihrer Ruhestellung unterhalb des Niveaus der Motorhaube liegenden Scheibenwischern, dadurch gekennzeichnet, dass die streifenförmigen Profilkörper in dem unteren, unterhalb des Niveaus der Motorhaube liegenden Bereich der Windschutzscheibe angeordnet sind.

11. Windschutzscheibe nach einem oder mehreren der Ansprüche 1 bis 10, dadurch gekennzeichnet, dass die streifenförmigen Profilkörper unterhalb der unteren Wendestellung der Scheibenwischerblätter angeordnet sind, wobei sie durch eine entsprechende Steuerschaltung für die Scheibenwischerbewegung jeweils nach einer Reihe normaler Scheibenwischerzyklen überstrichen werden.

**Revendications**

1. Pare-brise pour véhicules automobiles comportant, sur la surface externe de sa vitre (1, 9, 12, 16, 30), dans la zone balayée par l'essuie-glace (3, 4), des corps profilés en forme de bande en relief

(5; 6; 10; 13; 17; 21; 33, 34) qui présentent une ou plusieurs arêtes de raclage destinées à nettoyer le balai d'essuie-glace, caractérisé en ce que les corps profilés en forme de bandes sont faits d'une matière, du genre émail, imprimée sur la surface du verre et cuite à des températures élevées.

2. Pare-brise suivant la revendication 1, en verre feuilleté cintré, caractérisé en ce que les corps profilés en forme de bandes (5; 6; 10; 13; 17; 21; 33, 34) sont cuits au cours de l'opération de cintrage des glaces.

3. Pare-brise suivant la revendication 1, en verre de sécurité monolithique ayant subi une trempe thermique, caratérisé en ce que les corps profilés en forme de bandes (5; 6; 10; 13; 17; 21; 33, 34) sont cuits au cours du traitement thermique précédant l'opération de trempe.

4. Pare-brise suivant l'une quelconque des revendications 1 à 3, caractérisé en ce que les corps profilés en forme de bandes (5; 6; 10; 13; 17; 21; 33, 34) sont disposés dans une position angulaire inclinée par rapport à l'horizontale d'une manière telle que, lorsqu'ils sont balayés par le balai d'essuie-glace, ils forment, avec ce balai, un angle différent de zéro.

5. Pare-brise suivant l'une quelconque des revendications 1 à 4, caractérisé en ce que plusieurs corps profilés en forme de bandes (5; 10; 13; 21; 33, 34) sont disposés parallèlement les uns aux autres.

6. Pare-brise suivant l'une quelconque des revendications 1 à 5, caractérisé en ce que les corps profilés en forme de bandes (5, 6) ont une section transversale cunéiforme ou en dents de scie.

7. Pare-brise suivant l'une quelconque des revendications 1 à 6, caractérisé en ce que les corps profilés en forme de bandes (5; 10; 13; 21) sont faits de segments rectilignes qui sont disposés en chevrons sous un angle obtus.

8. Pare-brise suivant l'une quelconque des revendications 1 à 6, caractérisé en ce que les corps profilés en forme de bandes présentent une allure courbe.

9. Pare-brise suivant l'une quelconque des revendications 1 à 8, caractérisé en ce que les corps profilés en forme de bandes (13) sont faits d'une matière, du genre émail, conductrice électrique, en ce qu'ils comportent deux bornes de connexion à connecter au réseau d'alimentation de bord et servent de conducteurs chauffants.

10. Pare-brise suivant l'une quelconque des revendications 1 à 9, destiné à un véhicule automobile qui comporte des essuie-glaces qui, dans leur position de repos, se trouvent au-dessous du niveau du capot-moteur, caractérisé en ce que les corps profilés en forme de bandes sont disposés dans la zone inférieure du pare-brise, en dessous du niveau du capot-moteur.

11. Pare-brise suivant l'une quelconque des revendications 1 à 10, caractérisé en ce que les corps profilés en forme de bandes sont disposés en dessous de la position d'inversion de balayage inférieure des balais d'essuie-glaces, et en ce qu'ils sont balayés, à l'intervention d'un circuit de commande correspondant du mouvement de balayage de l'essuie-glace, chaque fois après une série de cycles de balayage normaux de l'essuie-glace.

## Claims

1. A windscreen for motor vehicles with rails (5; 6; 10; 13; 17; 21; 33, 34), sticking out from the outer face of that part of the glass windscreen (1, 9, 12, 16, 30), that is swept over by the windscreen wiper (3, 4), the rails having one or more stripping edges for the purpose of cleaning the windscreen wiper blade, characterized in that the strip-like rails are made up of enamel-like material, which has been printed on to the face of the glass and fused at high temperatures.

2. A windscreen as claimed in claim 1, made up of curved composite glass, characterized in that the rails (5; 6; 10; 13; 17; 21; 33, 34) are fused in place at the time of bending the glass windscreens.

3. A windscreen as claimed in claim 1, made up of thermally tempered single-sheet safety glass, characterized in that the rails (5; 6; 10; 13; 17; 21; 33, 34) are fused onto the windscreen as part of the thermal processing coming before the tempering operation.

4. A windscreen as claimed in any one or more of claims 1 to 3, characterized in that the rails (5; 6; 10; 13; 17; 21; 33, 34) are placed at a slope in relation to the horizontal at such an angle that, when swept over by the windscreen wiper blade, they make an angle therewith, which is different than zero degree.

5. A windscreen as claimed in any one or more of claims 1 to 4, characterized in that several rails (5; 10; 13; 21; 33, 34) are placed so as to be parallel to each other.

6. A windscreen as claimed in any one or more of claims 1 to 5, characterized in that the rails (5, 6) have a wedge-like cross-section, or one like the tooth of a saw.

7. A windscreen as claimed in any one or more of claims 1 to 6, characterized in that the rails (5; 10; 13; 21) are made up of straight-line segments, that are placed at an obtuse angle to each other with the form of a Vee or roof.

8. A windscreen as claimed in any one or more claims 1 to 6, characterized in that the rails are bent lengthways into a curved form.

9. A windscreen as claimed in any one of claims 1 to 8, characterized in that the rails (13) are made up of an electrically conducting enamel-like material, with electrical terminal for connection with the vehicle's electricity supply, the rails being designed for use as heating elements.

10. A windscreen as claimed in any one or more of claims 1 to 9 for a motor vehicle with windscreen wipers, designed to be rocked away into positions under the level of the bonnet when not in use, characterized in that the rails are placed in the lower part, that is under the level of the bonnet, of the windscreen.

11. A windscreen as claimed in any one or more of claims 1 to 10, characterized in that the rails are placed under the lower point of change in direction of the windscreen wiper blades, the rails being swept over by a control circuit for the operation of the windscreen wipers after a number of normal cycles of operation of the windscreen wipers.

0 025 545

Fig. 1

Fig. 2

Fig. 3

Fig. 4

Fig. 5

Fig. 6

Fig.7